# EUROPÄISCHE PATENTSCHRIFT

(11) **EP 2 990 556 B1**
(45) Veröffentlichungstag und Bekanntmachung des Hinweises auf die Patenterteilung: **26.10.2016**
(21) Anmeldenummer: 14182166.0
(22) Anmeldetag: 25.08.2014
(51) Int. Cl.: E04B 1/80, C08J 9/232, C08J 9/236, C08J 9/40

(54) **WÄRMEDÄMMPLATTE AUS EINEM POLYMER-PARTIKELSCHAUM SOWIE VERFAHREN ZUR HERSTELLUNG EINER SOLCHEN WÄRMEDÄMMPLATTE**
HEAT INSULATING PANEL MADE OF A POLYMER PARTICLE FOAM AND METHOD FOR PRODUCING SUCH A HEAT INSULATING PANEL
PANNEAU D'ISOLATION THERMIQUE EN MOUSSE PARTICULAIRE POLYMÈRE ET PROCÉDÉ DE FABRICATION D'UN TEL PANNEAU D'ISOLATION THERMIQUE

(43) Veröffentlichungstag der Anmeldung: 02.03.2016
(73) Patentinhaber: STO SE & Co. KGaA, 79780 Stühlingen (DE)
(72) Erfinder: Weier, Andreas, 78647 Trossingen (DE); Hitzler, Martin, 78244 Gottmadingen (DE); Schmeier, Silke, 79848 Bonndorf / Wittlekofen (DE); Nägele, Alexander, 79848 Bonndorf (DE)
(74) Vertreter: Gottschalk, Matthias

(56) Entgegenhaltungen:
- EP-A1- 2 366 847
- EP-A1- 2 527 124

## Beschreibung

Die Erfindung betrifft eine Wärmedämmplatte aus einem Polymer-Partikelschaum zur Innendämmung von Gebäudeaußenwänden oder -decken. Ferner betrifft die Erfindung ein Verfahren zur Herstellung einer solchen Wärmedämmplatte.

### Stand der Technik

Wärmedämmplatten dienen der Wärmedämmung von Gebäudeaußenwänden und -decken. Sie werden in der Regel außenseitig auf eine Gebäudeaußenwand aufgebracht, da die innenseitige Anbringung aus bauphysikalischer Sicht oftmals problematisch ist. Insbesondere besteht die Gefahr eines Tauwasserausfalls innerhalb des Wandaufbaus, d. h. zwischen der innenseitig aufgebrachten Wärmedämmschicht und der Außenwand. Denn gelangt Wasserdampf hinter die Wärmedämmschicht und kühlt an der "kalten" Außenwand ab, kondensiert er. In der Baupraxis spricht man dann vom Tauwasserausfall. Das ausgefallene Tauwasser bzw. Kondensat kann im Wandaufbau zur Schimmelpilzbildung führen, was es unbedingt zu vermeiden gilt. Allerdings kann eine innenseitige Anbringung der Wärmedämmschicht auch geboten sein, beispielsweise aus Gründen des Denkmalschutzes. In diesem Fall werden in der Regel Maßnahmen getroffen, die eine Wasserdampfdiffusion von der Innenraumseite her durch die Wärmedämmschicht hindurch verhindern. Derartige Maßnahmen umfassen insbesondere die Anbringung einer Dampfsperre, die - vom Innenraum her betrachtet - vor der Wärmedämmschicht angebracht wird. Die Anbringung der Dampfsperre vor der Wärmedämmschicht birgt jedoch die Gefahr in sich, dass die Dampfsperre zerstört wird, beispielsweise durch Einschlagen von Nägeln in die Wand. Da bereits kleinste Löcher oder Risse die Funktion der Dampfsperre aufzuheben vermögen, ist die Anbringung einer Dampfsperre häufig ineffektiv.

Aus dem Stand der Technik sind darüber hinaus zur Innendämmung geeignete Wandaufbauten bekannt, die den Einsatz einer Dampfsperre entbehrlich machen sollen. Insbesondere werden Wandaufbauten mit feuchtigkeitsaufnehmenden Schichten vorgeschlagen, die einen Feuchtigkeitsausgleich bzw. eine Feuchtigkeitsregulierung ermöglichen sollen. Die Schichten sind hierzu wasserdampfdiffusionsoffen ausgebildet. Das heißt, dass sie in der Lage sind, Feuchtigkeit in Form von Wasserdampf aufzunehmen und zumindest temporär zu speichern. Sinkt die Luftfeuchtigkeit des Innenraums, wird die aufgenommene Feuchtigkeit wieder an den Innenraum abgegeben. Dies ist darauf zurückzuführen, dass die Wasserdampfdiffusion stets passiv entlang eines vorhandenen Konzentrationsgefälles erfolgt.

Die feuchtigkeitsaufnehmenden Schichten werden in der Regel zum Innenraum hin auf eine innenseitig angebrachte Wärmedämmschicht aufgebracht. Um genügend Speicherkapazität zu schaffen, weisen sie regelmäßig eine gewisse Stärke auf, die jedoch stets zu Lasten der Wohnfläche geht. Reicht die Speicherkapazität nicht aus und Wasserdampf gelangt hinter die Wärmedämmschicht, besteht zudem die Gefahr, dass er kondensiert und das Kondensat nicht mehr abgeführt werden kann. Die feuchte Wand bildet dann einen hervorragenden Nährboden für die Bildung von Schimmelpilzen.

Um dies zu verhindern, sind ferner Wandaufbauten mit kapillarleitfähigen bzw. kapillaraktiven Bereichen bekannt. Die kapillarleitfähigen bzw. kapillaraktiven Bereiche sollen das aktive Abführen von Kondensat ermöglichen. Ein solcher Wandaufbau geht beispielhaft aus der WO 2009/026910 A1 hervor.

Als ein Nachteil erweist sich jedoch, dass die kapillarleitfähigen bzw. kapillaraktiven Bereiche oftmals "feucht" sind und sich gegenüber den anderen Bereichen, die trocken sind, abzeichnen, und zwar selbst dann, wenn die die kapillarleitfähigen bzw. kapillaraktiven Bereiche aufweisende Wärmedämmschicht zum Innenraum hin von einer homogenen Putzschicht abgedeckt wird.

Ferner offenbart die EP 2527124 A1 eine Wärmedämmplatte aus einem Polymer-Partikelschaum, die miteinander verschweißte geschäumte Polymer-Partikel umfasst, die zusätzlich über ein organisches oder anorganisches Bindemittel miteinander verklebt sind, so dass zwischen den verschweißten und verklebten Polymer-Partikeln ein Zwickelvolumen aus untereinander verbundenen Zwickelräumen verbleibt.

Ausgehend von dem vorstehend genannten Stand der Technik liegt daher der vorliegenden Erfindung die Aufgabe zugrunde, eine Wärmedämmplatte zu schaffen, die durchgehend kapillaraktiv ist und darüber hinaus gute Wärmedämmeigenschaften besitzt. Die Wärmedämmplatte soll somit zur Innendämmung von Gebäudeaußenwänden und -decken geeignet sein. Ferner soll die Wärmedämmplatte einfach und kostengünstig herzustellen sein.

Zur Lösung der Aufgabe werden eine Wärmedämmplatte mit den Merkmalen des Anspruchs 1 und ein Verfahren zur Herstellung einer Wärmedämmplatte mit den Merkmalen des Anspruchs 6 vorgeschlagen. Vorteilhafte Weiterbildungen sind den jeweiligen Unteransprüchen zu entnehmen.

### Offenbarung der Erfindung

Erfindungsgemäß wird eine Wärmedämmplatte aus einem Polymer-Partikelschaum vorgeschlagen, die miteinander verschweißte geschäumte Polymer-Partikel umfasst, die zusätzlich über ein organisches Bindemittel miteinander verklebt sind, so dass zwischen den verschweißten und verklebten Polymer-Partikeln ein Zwickelvolumen aus untereinander verbundenen Zwickelräumen verbleibt, wobei die das Zwickelvolumen begrenzenden Oberflächen der Polymer-Partikel mit einer Beschichtung versehen sind, die eine Kapillaraktivität der Wärmedämmplatte bewirkt oder eine bereits vorhandene Kapillaraktivität erhöht.

Die vorgeschlagene Wärmedämmplatte ist jedoch nicht nur kapillaraktiv, sondern auch wasserdampfdiffusionsoffen. Die Diffusionswiderstandszahl µ beträgt vorzugsweise ≤ 50, weiterhin vorzugsweise ≤ 20 und idealerweise ≤ 15. Die Wärmedämmplatte ist demnach in der Lage Feuchtigkeit in Form von Wasserdampf aufzunehmen. Die Kapillaraktivität wiederum gewährleistet, dass aufgenommene Feuchtigkeit sicher wieder abgeführt wird. Die vorgeschlagene Wärmedämmplatte ist daher zur Innendämmung einer Gebäudeaußenwand oder -decke geeignet.

Eine aus mehreren solchen Wärmedämmplatten hergestellte Wärmedämmschicht weist zudem den Vorteil auf, dass die Wärmedämmschicht über ihre gesamte Fläche kapillaraktiv ist. Es kann demnach nicht zu Abzeichnungen einzelner kapillaraktiver Bereiche gegenüber einer ansonsten kapillarinaktiven Wärmedämmschicht kommen.

Die Kapillaraktivität der vorgeschlagenen Wärmedämmplatte wird insbesondere durch die Beschichtung im Inneren des Polymer-Partikelschaumkörpers gewährleistet. Die Beschichtung kleidet dabei das Zwickelvolumen lediglich aus, so dass Zwickelräume erhalten bleiben, die untereinander verbunden sind. Dies setzt voraus, dass der Polymer-Partikelschaumkörper bereits vor dem Beschichten untereinander verbundene Zwickelräume aufweist.

Um dies zu gewährleisten, werden bei der Herstellung des Polymer-Partikelschaumkörpers die Polymer-Partikel beim Endschäumen nicht nur miteinander verschweißt, sondern zusätzlich verklebt. Die Verklebung wird über ein organisches Bindemittel bewirkt. Diese erweicht beim Endschäumen und bildet einen die Partikel zumindest teilweise umhüllenden Bindemittelfilm aus, der die Expansion der Partikel beim Endschäumen verringert. Auf diese Weise bleiben zwischen den Polymer-Partikeln Zwickelräume erhalten, die untereinander verbunden sind, d h. ein zusammenhängendes Hohlraumvolumen ausbilden.

Das zusammenhängende Hohlraumvolumen kann derart beschaffen sein, dass bereits eine gewisse Kapillaraktivität des Polymer-Partikelschaumkörpers auch ohne Beschichtung im Inneren gegeben ist. In der Regel wird dies jedoch nicht der Fall sein, so dass die Kapillaraktivität der erfindungsgemäßen Wärmedämmplatte vorrangig auf die Beschichtung zurückzuführen ist, die auf den das Zwickelvolumen begrenzenden Oberflächen der Polymer-Partikel aufgebracht ist.

Bevorzugt ist die die Kapillaraktivität bewirkende bzw. erhöhende Beschichtung über wenigstens ein organisches und/oder anorganisches Bindemittel, insbesondere ein silikatisches Bindemittel, vorzugsweise Wasserglas, gebunden. Derartige Bindemittel, insbesondere silikatische Bindemittel, wie beispielsweise Wasserglas, steigern aufgrund ihrer Polarität die Kapillaraktivität des Polymer-Partikelschaums. Silikatische Bindemittel, wie beispielsweise Wasserglas, wirken zudem aufgrund ihres hohen pH-Wertes der Schimmelpilzbildung entgegen, so dass auf die Zugabe von Konservierungsstoffen, beispielsweise in Form von Bioziden, verzichtet werden kann.

Anorganische Bindemittel besitzen ferner den Vorteil, dass sie gegenüber organischen Bindemitteln nicht brennbar sind. Alternativ oder ergänzend kann aber auch wenigstens ein organisches Bindemittel zugegeben werden. Hier eignen sich insbesondere herkömmliche Dispersionsbindemittel.

Des Weiteren bevorzugt enthält die die Kapillaraktivität bewirkende bzw. erhöhende Beschichtung wenigstens einen Wirkstoff, der wasseraufnehmend und/oder wasserleitend wirkt. Vorzugsweise ist der Wirkstoff ein Hydroxid, beispielsweise Aluminiumhydroxid, und/oder ein Hydrat, beispielsweise Titanoxidhydrat.

Optional kann die die Kapillaraktivität erhöhende Beschichtung wenigstens einen Füll- und/oder Feststoff, vorzugsweise aus der Gruppe der silikatischen oder oxidischen Füllstoffe, der Carbonate und/oder der Sulfate, enthalten. Derartige mineralische Füll- und/oder Feststoffe setzen die Brennbarkeit des Polymer-Partikelschaums herab.

Alternativ oder ergänzend kann die die Kapillaraktivität erhöhende Beschichtung Pigmente und/oder athermane Stoffe enthalten, um in bekannter Weise die Wärmedämmeigenschaften der Wärmedämmplatte zu verbessern. Als athermane Materialien eignen sich insbesondere Materialien wie Graphit oder Ruß, die eine dunkle Einfärbung bewirken und als IR-Trübungsmittel dienen. Helle Pigmente, insbesondere Weißpigmente, können als IR-Reflektoren eingesetzt werden, die eine zu starke Erwärmung bei vorhandener Wärmestrahlung verhindern und somit einer unerwünschten Formveränderung der Wärmedämmplatte entgegen wirken.

Insgesamt sollte der Füll- und/oder Feststoffgehalt jedoch nicht zu hoch gewählt werden, da sich ein hoher Füll- und/oder Feststoffgehalt ungünstig auf die Verarbeitungseigenschaften der Wärmedämmplatte auswirken kann. Beispielsweise kann er das Schneiden der Platte - insbesondere beim Heißdrahtschneiden - erschweren. Zudem verschlechtert ein zu hoher Füll- und/oder Feststoffgehalt die Wärmedämmeigenschaften der Platte.

Darüber hinaus gilt es bei der Zugabe von Füll- und/oder Feststoffen auf die Größe der einzelnen Teilchen zu achten. Denn sind diese zu groß, besteht die Gefahr, dass sie die Verbindung der Zwickelräume untereinander zusetzen. Bevorzugt liegt daher der d90-Wert der Füll- und/oder Feststoffteilchen bei < 250 µm, vorzugsweise bei < 100 µm und weiterhin vorzugsweise bei < 50 µm.

Des Weiteren kann die die Kapillaraktivität bewirkende bzw. erhöhende Beschichtung ein Flammschutzmittel, vorzugsweise Aluminiumhydroxid, Ettringit und/oder ein anderes Hydrat, enthalten, um die Brennbarkeit der Wärmedämmplatte aus Polymer-Partikelschaum herabzusetzen.

Der Polymer-Partikelschaum umfasst bevorzugt verschweißte und verklebte Polymer-Partikel aus Polystyrol, Polylactid, Polyethylen und/oder Polypropylen. Polymer-Partikelschäume aus diesen Polymeren weisen in der Regel hervorragende Wärmedämmeigenschaften auf.

Zur Lösung der eingangs genannten Aufgabe wird ferner ein Verfahren zur Herstellung einer erfindungsgemäßen Wärmedämmplatte vorgeschlagen. Das Verfahren umfasst die Schritte:
a) Herstellen eines Polymer-Partikelschaumkörpers aus schäumbaren und/oder vorgeschäumten Polymer-Partikeln, die vor einem Endschäumprozess zumindest teilweise mit einem organischen Bindemittel beschichtet werden, das bei Aktivierung durch Zugabe von Feuchtigkeit und/oder Wärme einen die Expansion der Polymer-Partikel verringernden Bindemittelfilm ausbildet, so dass zwischen den verschweißten und verklebten Polymer-Partikeln des endgeschäumten Polymer-Partikelschaumkörpers ein Zwickelvolumen aus untereinander verbundenen Zwickelräumen verbleibt,
b) Beschichten der das Zwickelvolumen begrenzenden Oberflächen der verschweißten und verklebten Polymer-Partikel des Polymer-Partikelschaumkörpers mit einer Beschichtungszusammensetzung, die nach dem Aushärten eine Kapillaraktivität der Wärmedämmplatte bewirkt oder eine bereits vorhandene Kapillaraktivität der Wärmedämmplatte erhöht.

Wie bereits in Zusammenhang mit der erfindungsgemäßen Wärmedämmplatte erwähnt, werden vorliegend die Polymer-Partikel beim Endschäumen nicht nur verschweißt, sondern zusätzlich über das organische Bindemittel miteinander verklebt. Die zusätzliche Verklebung kompensiert einen geringeren Grad der Verschweißung der Polymer-Partikel, der auf die verringerte Expansion der Polymer-Partikel beim Endschäumen zurückzuführen ist, so dass ein stabiler Verbund der Polymer-Partikel gewährleistet ist. Durch die verringerte Expansion der Polymer-Partikel beim Endschäumen ist zudem sichergestellt, dass ein Zwickelvolumen aus untereinander verbundenen Zwickelräumen zwischen den Polymer-Partikeln verbleibt. Dieses Zwickelvolumen aus untereinander verbundenen Zwickelräumen stellt eine Voraussetzung für den nachfolgenden Schritt b) dar. Denn zum Beschichten der das Zwickelvolumen begrenzenden Oberflächen im Inneren des Polymer-Partikelschaumkörpers muss die Beschichtungszusammensetzung in den Polymer-Partikelschaumkörper eindringen können. Das heißt, dass der Polymer-Partikelschaumkörper für die Beschichtungszusammensetzung durchlässig sein muss.

Die Durchlässigkeit des Polymer-Partikelschaumkörpers erstreckt sich auch auf andere Flüssigkeiten, wie beispielsweise Wasser. Dies heißt jedoch nicht zwangsläufig, dass der Polymer-Partikelschaumkörper auch kapillaraktiv ist. Um dies zu erreichen bzw. zu gewährleisten, wird Schritt b) des erfindungsgemäßen Verfahrens durchgeführt.

Eine nach dem erfindungsgemäßen Verfahren hergestellte Wärmedämmplatte ist darüber hinaus wasserdampfdiffusionsoffen. Die Diffusionswiderstandszahl µ beträgt vorzugsweise ≤ 50, weiterhin vorzugsweise ≤ 20 und idealerweise ≤ 15. Die Wärmedämmplatte ist demnach in der Lage Feuchtigkeit in Form von Wasserdampf aufzunehmen.

Die Diffusionsoffenheit der Wärmedämmplatte erweist sich insbesondere in Verbindung mit der Kapillaraktivität der Platte als Vorteil. Denn die Kapillaraktivität stellt sicher, dass im Falle einer Kondensation des Wasserdampfes auf der dem Innenraum abgewandten Seite der Wärmedämmplatte, das Kondensat in umgekehrter Richtung auch wieder an den Innenraum abgegeben wird. Dadurch ist sichergestellt, dass keine Feuchtigkeit hinter der Wärmedämmplatte verbleibt, welche die Schimmelpilzbildung fördern würde.

Bevorzugt wird in Schritt b) eine flüssige Beschichtungszusammensetzung, insbesondere in Form einer Lösung, Dispersion, Suspension oder Emulsion, zum Beschichten der das Zwickelvolumen begrenzenden Oberflächen der verschweißten und verklebten Polymer-Partikel verwendet, die wenigstens ein organisches und/oder anorganisches Bindemittel, insbesondere ein silikatisches Bindemittel, vorzugsweise Wasserglas enthält.

Die Verwendung einer flüssigen Beschichtungszusammensetzung vereinfacht das Einbringen in die Tiefe des Polymer-Partikelschaumkörpers. Dabei gilt, je niedrigviskoser die flüssige Beschichtungszusammensetzung ist, desto leichter dringt diese in den Polymer-Partikelschaumkörper ein. Die Viskosität der flüssigen Beschichtungszusammensetzung liegt vorzugsweise unter 1000 mP*s, weiterhin vorzugsweise unter 500 mP*s, idealerweise unter 100 mP*s.

Das in der flüssigen Beschichtungszusammensetzung enthaltene organische und/oder anorganische Bindemittel stellt sicher, dass die Beschichtungszusammensetzung zu einer das Zwickelvolumen auskleidenden Beschichtung aushärtet. Als Bindemittel werden bevorzugt anorganische, insbesondere silikatische Bindemittel, wie beispielsweise Wasserglas eingesetzt. Denn anorganische Bindemittel sind im Vergleich zu organischen Bindemitteln nicht brennbar, so dass hierüber die Brennbarkeit des Polymer-Partikelschaumkörpers herabgesetzt wird.

Silikatische Bindemittel, wie beispielsweise Wasserglas, besitzen zudem einen hohen pH-Wert, der die Bildung von Schimmelpilzen hemmt. Dies wirkt sich insoweit als vorteilhaft aus, als auf eine Verwendung von Konservierungsmitteln, insbesondere Bioziden, verzichtet werden kann.

Ein hoher pH-Wert des Bindemittels führt zu einem ebenfalls hohen pH-Wert der Beschichtungszusammensetzung. Vorzugsweise beträgt der pH-Wert der Beschichtungszusammensetzung > 10, weiterhin vorzugsweise > 11, idealerweise > 11,5. Dies ermöglicht die Verwendung einer biozidfreien und damit toxikologisch völlig unbedenklichen Beschichtungszusammensetzung.

Alternativ können auch Bindemittelmischungen eingesetzt werden, wobei die Mischung wenigstens ein weiteres anorganisches und/oder organisches Bindemittel, insbesondere ein Dispersionbindemittel, enthalten kann.

Das Bindemittel bzw. die Bindemittelmischung ist vorzugsweise in der flüssigen Beschichtungszusammensetzung gelöst, dispergiert, suspendiert oder emulgiert, um eine gleichmäßige Verteilung des Bindemittels in der Beschichtungszusammensetzung und damit im Polymer-Partikelschaumkörper sicherzustellen.

In Weiterbildung der Erfindung wird vorgeschlagen, dass die Beschichtungszusammensetzung wenigstens ein Additiv, insbesondere ein Spreit-, Netz- und/oder Dispergiermittel, enthält. Derartige Additive setzen die Grenzflächenspannung zwischen einer Flüssigkeit und einem hierin enthaltenen Feststoff herab, so dass eine gleichmäßige Verteilung des Feststoffs in der Flüssigkeit bzw. in der Beschichtungszusammensetzung gewährleistet ist. Ferner wird durch derartige Additive die Oberflächenspannung der Beschichtungszusammensetzung herabgesetzt, so dass die Benetzung der zu beschichtenden Oberflächen verbessert wird. Durch die Zugabe entsprechender Additive kann somit eine gleichmäßige und zugleich dünnschichtige Beschichtung der zu beschichtenden Oberflächen erreicht werden. Optional können auch andere oder weitere Additive zugegeben werden, um beispielsweise die Eigenschaften der hieraus gebildeten Beschichtung zu beeinflussen.

Ferner kann in Schritt b) eine Beschichtungszusammensetzung verwendet werden, die wenigstens einen Füll- und/oder Feststoff, vorzugsweise aus der Gruppe der silikatischen oder oxidischen Füllstoffe, der Carbonate und/oder der Sulfate, enthält. Derartige Füll- und/oder Feststoffe sind mineralischen Ursprungs und daher nicht brennbar, so dass die Brennbarkeit einer derart hergestellten Wärmedämmplatte herabgesetzt wird.

Optional können der Beschichtungszusammensetzung auch Pigmente und/oder athermane Stoffe als Füll- und/oder Feststoffe zugegeben werden, um in bekannter Weise die Wärmedämmeigenschaften einer nach diesem Verfahren hergestellten Wärmedämmplatte zu verbessern. Als athermane Materialien eignen sich insbesondere Materialien wie Graphit oder Ruß, die eine dunkle Einfärbung bewirken und als IR-Trübungsmittel dienen. Helle Pigmente, insbesondere Weißpigmente, können zudem als IR-Reflektoren eingesetzt werden, die eine zu starke Erwärmung bei Wärmestrahlung verhindern und auf diese Weise einer unerwünschten Formveränderung der Wärmedämmplatte entgegen wirken. Durch die Zugabe von athermanen Materialien und/oder von Pigmenten kann zudem ein farbliches Absetzen der Beschichtungszusammensetzung bewirkt werden, um beispielsweise die Eindringtiefe der Beschichtungszusammensetzung in den Polymer-Partikelschaumkörper visuell zu erfassen und auf diese Weise besser kontrollieren zu können.

Vorteilhafterweise beträgt der Gesamt-Feststoffgehalt < 60 Gew.-%, vorzugsweise < 40 Gew.-% und weiterhin vorzugsweise < 30 Gew.-% bezogen auf das Gesamtgewicht der Beschichtungszusammensetzung. Denn ein zu hoher Feststoffgehalt verschlechtert die Wärmedämmeigenschaften. Darüber hinaus kann sich ein zu hoher Feststoffgehalt negativ auf die Verarbeitungseigenschaften einer derart hergestellten Wärmedämmplatte auswirken. Denn ein zu hoher Feststoffgehalt kann zur Folge haben, dass sich die Platte - insbesondere beim Heißdrahtschneiden - schlechter schneiden lässt.

Darüber hinaus gilt es bei der Zugabe von Füll- und/oder Feststoffen auf die Größe der einzelnen Teilchen zu achten. Denn sind diese zu groß, besteht die Gefahr, dass sie sich in der Beschichtungszusammensetzung absetzen. Ferner können große Füll- und/oder Feststoffteilchen in den Zwischenräumen zwischen den Polymer-Partikeln hängen bleiben und somit das Zwickelvolumen verstopfen. Eine gleichmäßige Verteilung der Beschichtungszusammensetzung im Inneren des Polymer-Partikelschaumkörpers ist dann nicht mehr gewährleistet. Bevorzugt wird daher ein d90-Wert der Füll- und/oder Feststoffteilchen < 250 µm, vorzugsweise < 100 µm und weiterhin vorzugsweise < 50 µm vorgeschlagen.

Vorteilhafterweise wird in Schritt b) eine Beschichtungszusammensetzung verwendet, die ein Flammschutzmittel, vorzugsweise Aluminiumhydroxid, Ettringit und/oder ein anderes Hydrat, enthält. Derartige Flammschutzmittel sind in der Regel pulverförmig und können in der Beschichtungszusammensetzung gelöst, dispergiert, suspendiert oder emulgiert werden. Die Beschichtungszusammensetzung dient dann als Transportmittel, um das Flammschutzmittel in den Polymer-Partikelschaumkörper einzubringen und dort zu deponieren.

Das Beschichten in Schritt b) wird vorzugsweise mittels Tränken, Tunken, Tauchen, Fluten, Begießen und/oder Besprühen bewirkt. Die aufgrund des zusammenhängenden Zwickelvolumens gegebene Durchlässigkeit des Polymer-Partikelschaumkörpers gewährleistet dabei, dass sich das Zwickelvolumen beim Tränken, Tunken oder Tauchen des Polymer-Partikelschaumkörpers in die Beschichtungszusammensetzung vollsaugt. Dies gilt analog, wenn der Polymer-Partikelschaumkörper alternativ mit der Beschichtungszusammensetzung begossen oder besprüht wird. Unterstützend kann das Beschichten zumindest zeitweise unter Druck oder bei Unterdruck durchgeführt werden.

Um eine Wärmedämmplatte zu erhalten, die über ihren gesamten Querschnitt kapillaraktiv ist, gilt es sicherzustellen, dass die Platte in ihrem Inneren durchgehend beschichtet ist. Das heißt, dass die das Zwickelvolumen begrenzenden Oberflächen der Polymer-Partikel vollständig mit der Beschichtungszusammensetzung zu versehen sind.

Da auch nach dem Beschichten ein Zwickelvolumen aus untereinander verbundenen Zwickelräumen erhalten bleiben soll, wird ferner vorgeschlagen, dass ein Teil der Beschichtungszusammensetzung nach dem Beschichten, beispielsweise durch Abtropfen oder Abschleudern, aus dem Zwickelvolumen wieder entfernt wird. Dadurch ist sichergestellt, dass die aus der Beschichtungszusammensetzung ausgebildete Beschichtung die Zwickelräume lediglich auskleidet und nicht ausfüllt.

Zur Herstellung des Polymer-Partikelschaumkörpers in Schritt a) können insbesondere schäumbare und/oder vorgeschäumte Polymer-Partikel aus Polystyrol, Polylactid, Polyethylen und/oder Polypropylen verwendet werden. Ein hieraus hergestellter Polymer-Partikelschaumkörper weist hervorragende Wärmedämmeigenschaften auf. Durch die anschließend in Schritt b) vorgesehene Beschichtung der das Zwickelvolumen begrenzenden Oberflächen der verschweißten und verklebten Polymer-Partikel werden die Wärmedämmeigenschaften der aus dem Polymer-Partikelschaumkörper hergestellten Wärmedämmplatte nur unwesentlich verändert, so dass auch diese hervorragende Wärmedämmeigenschaften besitzt.

Die Verwendung derartiger Polymer zur Herstellung des Polymer-Partikelschaumkörpers gewährleistet zudem, dass der Polymer-Partikelschaumkörper die gewünschte Diffusionsoffenheit bzw. Wasserdampfdurchlässigkeit besitzt.

Des Weiteren wird vorgeschlagen, dass zur Herstellung des Polymer-Partikelschaumkörpers in Schritt a) ein organisches Bindemittel, insbesondere ein Dispersionspulver, beispielsweise ein Dispersionspulver auf Basis von Homo-, Co- oder Terpolymeren von Acrylaten, Styrolacrylat, Vinylacetat, Ethylen, Vinylversatat, Vinyllaurat, Alkylacrylaten und/oder Vinylchlorid, zum Beschichten der schäumbaren und/oder vorgeschäumten Polymer-Partikel verwendet wird. Organische Bindemittel besitzen den Vorteil, dass sie im Vergleich zu anorganischen Bindemitteln eine höhere Bindekraft besitzen, so dass der Bindemittelanteil reduziert werden kann. Organische Bindemittel sind gegenüber anorganischen Bindemitteln zwar brennbar, da aber die das Zwickelvolumen begrenzenden Oberflächen der Polymer-Partikel nachträglich in Schritt b) nochmals beschichtet werden, wirkt sich die Brennbarkeit des organischen Bindemittels zur Verklebung der schäumbaren und/oder vorgeschäumten Polymer-Partikel während des Endschäumprozesses nicht negativ auf das Brandverhalten der hieraus hergestellten Wärmedämmplatte aus. Ferner kann dem organischen Bindemittel wenigstens ein Additiv, insbesondere ein Flammschutzmittel, zugegeben werden, um das Brandverhalten der Wärmedämmplatte zu verbessern.

Zum Beschichten der schäumbaren und/oder vorgeschäumten Polymer-Partikel mit dem vorzugsweise pulverförmigen organischen Bindemittel, können diese gemischt werden. Um die Haftung des pulverförmigen organischen Bindemittels an den Polymer-Partikeln zu verbessern, können feuchte oder angefeuchtete Polymer-Partikel verwendet werden.

Die in Schritt a) zur Aktivierung des Bindemittels erforderliche Feuchtigkeit und/oder Wärme wird bevorzugt bei einem Vor- oder Endschäumprozess, vorzugsweise in Form von Wasserdampf, zugegeben. Die Aktivierung des Bindemittels hat zur Folge, dass dieses erweicht und sich als dünner Film zumindest teilweise um die schäumbaren und/oder vorgeschäumten Polymer-Partikel legt. Der Bindemittelfilm hat wiederum zur Folge, dass die Expansion der Polymer-Partikel beim Endschäumen verringert wird und ein Zwickelvolumen aus untereinander verbundenen Zwickelräumen zwischen den endgeschäumten Polymer-Partikeln verbleibt. Damit einher geht ein geringerer Grad der Verschweißung der Polymer-Partikel, der aber durch die zusätzliche Verklebung kompensiert wird. Auf diese Weise wird ein stabiler Verbund der Polymer-Partikel erreicht.

Bevorzugt werden zur Herstellung des Polymer-Partikelschaumkörpers in Schritt a) 25 bis 99,5 Gew.-%, vorzugsweise 40 bis 99 Gew.-% und weiterhin vorzugsweise 50 bis 98,5 Gew.-% schäumbare und/oder vorgeschäumte Polymer-Partikel und 0,5 bis 75 Gew.-%, vorzugsweise 1 bis 60 Gew.-% und weiterhin vorzugsweise 1,5 bis 50 Gew.-% Bindemittel jeweils bezogen auf das Gesamtgewicht der Ausgangsstoffe verwendet. Dabei können die Ausgangsstoffe neben Polymer-Partikel und Bindemittel weitere Füll- und/oder Feststoffe und/oder Additive, insbesondere Flammschutzmittel, enthalten.

Nachfolgend wird die Erfindung anhand von konkreten Ausführungsbeispielen erläutert.

### Ausführungsbeispiel 1

### Schritt a)

Herstellen eines Polymer-Partikelschaumkörpers:
Es wurden 85 Gew.-% schäumbare Polystyrol-Partikel mit 15 Gew.-% Dispersionspulver (Basis Ethylen und Vinylchlorid) gemischt und unter Zugabe von Druck (1 bar) und Wärme (100°C), wobei Wasserdampf als Heizmedium diente, vorgeschäumt. Dabei erweichte das Dispersionspulver und bildete einen Polymerfilm auf den vorgeschäumten Polystyrol-Partikeln aus.

Neun Liter der beschichteten und vorgeschäumten Polystyrol-Partikel wurden in eine Form mit den Abmessungen 30 cm x 30 cm x 10 cm gegeben und unter Druck (1 bar) und Wärme (100°C) endgeschäumt, wobei wiederum Wasserdampf als Heizmedium diente. Nach dem Druckabbau wurde das Formteil aus der Form entnommen und über einen Zeitraum von einer Woche bei Raumtemperatur getrocknet.

### Schritt b)

Beschichten der das Zwickelvolumen begrenzenden Oberflächen der verschweißten und verklebten Polystyrol-Partikel:
Das Beschichten wurde mittels Tränken bewirkt. Die Tränkflüssigkeit enthielt 98,9 Gew.-% Wasserglas (30 Gew.-% Feststoffgehalt) und 1,1 Gew.-% Netzmittel. Die Viskosität der Tränkflüssigkeit betrug unter 40 mP*s.

Zunächst wurde die Tränkflüssigkeit angerührt und in eine Wanne gepumpt, in welche zuvor der zu beschichtende Polystyrol-Partikelschaumkörper eingelegt wurde. Die Wanne wurde soweit mit der Tränkflüssigkeit gefüllt, dass der Polystyrol-Partikelschaumkörper vollständig in der Tränkflüssigkeit untergetaucht werden konnte. Anschließend wurde der Polystyrol-Partikelschaumkörper aus der Wanne entnommen und zum Abtropfen aufgestellt, so dass überschüssige Tränkflüssigkeit aus dem Zwickelvolumen entweichen und die verbleibende Flüssigkeit trocknen konnte.

Der Polystyrol-Partikelschaumkörper wies nach dem Beschichten eine Wärmeleitfähigkeit λ nach DIN EN 12667 von 0,0335 W/(mK) und eine Dichte ρ nach DIN EN 1602 von 29,0 kg/m³ auf. Die Diffusionswiderstandszahl µ nach DIN EN ISO 7783: 2011 betrug 13.

Die Bestimmung der Kapillaraktivität erfolgte unter Zuhilfenahme von Wasserbehältern wie sie in der DIN EN 1609 beschrieben werden, welche die Bestimmung der Wasseraufnahme bei kurzzeitigem teilweisem Eintauchen betrifft. Die hierzu verwendeten Probenkörper hatten die Abmessungen 200 mm x 200 mm x 60 mm. Die Probenkörper wurden dabei auf ein grobmaschiges Gitter auf dem Boden einer Wanne mit Wasser gestellt, so dass 10 mm des Probenkörpers mit einer Querschnittsfläche von 200 mm x 200 mm in das Wasser eintauchten. Auf die gegenüberliegende, nicht eingetauchte Oberfläche wurde ein Filterpapier (Durchmesser D = 150 mm, Fläche A = 17671 mm²) gelegt und vollflächig mit einem Stahlstempel der Abmessungen 200 mm x 200 mm und einem Gewicht von 3,2 kg beschwert, so dass der Probenkörper nicht aufschwimmen konnte. Nach 48 Stunden wurde die Gewichtszunahme des Filterpapiers bestimmt.

Bei dem Probenkörper, der nach dem Ausführungsbeispiel 1 hergestellt worden war, betrug die Gewichtszunahme des Filterpapiers nach 48 Stunden 1,826 g, was einer Wasseraufnahme von 103 g/m² entspricht. Das Filterpapier war vollständig durchtränkt. Der Probenkörper zeichnete sich demnach durch eine hohe Kapillaraktivität aus.

### Ausführungsbeispiel 2

### Schritt a)

### Wie Ausführungsbeispiel 1

### Schritt b)

Das Beschichten wurde - wie beim Ausführungsbeispiel 1 - mittels Tränken bewirkt. Allein die Zusammensetzung der Tränkflüssigkeit wurde geändert. Diesmal enthielt die Tränkflüssigkeit 22,5 Gew.-% Wasser, 55,5 Gew.-% Wasserglas (30 Gew.-% Feststoffgehalt), 20 Gew.-% Aluminiumhydroxid und 2 Gew.-% Netzmittel.

Die Viskosität der Tränkflüssigkeit betrug unter 50 mP*s.

Der Polystyrol-Partikelschaumkörper wies nach dem Beschichten eine Wärmeleitfähigkeit λ nach DIN EN 12667 von 0,0365 W/(mK) und eine Dichte ρ nach DIN EN 1602 von 35,2 kg/m³ auf. Die Diffusionswiderstandszahl µ nach DIN EN ISO 7783: 2011 betrug 14.

Die Kapillaraktivität wurde wie in Zusammenhang mit dem Ausführungsbeispiel 1 beschrieben bestimmt.

Die Gewichtszunahme des Filterpapiers betrug nach 48 Stunden 1,889 g, was einer Wasseraufnahme von 107 g/m² entspricht. Das Filterpapier war ebenfalls vollständig durchtränkt. Auch dieser Probenkörper zeichnete sich demnach durch eine hohe Kapillaraktivität aus.

### Ausführungsbeispiel 3

### Schritt a)

Herstellen eines Polymer-Partikelschaumkörpers:
Es wurden 65 Gew.-% schäumbare Polystyrol-Partikel mit 15 Gew.-% Dispersionspulver (Basis Ethylen und Vinylchlorid) und 20 Gew.-% Blähgraphit als Flammschutzmittel gemischt und unter Zugabe von Druck (1 bar) und Wärme (100°C), wobei Wasserdampf als Heizmedium diente, vorgeschäumt. Dabei erweichte das Dispersionspulver und bildete einen das Flammschutzmittel an die Polystyrol-Partikel bindenden Polymerfilm auf den vorgeschäumten Polystyrol-Partikeln aus.

Neun Liter der mit dem organischen Bindemittel und dem Flammschutzmittel beschichteten und vorgeschäumten Polystyrol-Partikel wurden in eine Form mit den Abmessungen 30 cm x 30 cm x 10 cm gegeben und unter Druck (1 bar) und Wärme (100°C) endgeschäumt, wobei wiederum Wasserdampf als Heizmedium diente. Nach dem Druckabbau wurde das Formteil aus der Form entnommen und über einen Zeitraum von einer Woche bei Raumtemperatur getrocknet.

### Schritt b)

### Wie in Ausführungsbeispiel 1

Der Polystyrol-Partikelschaumkörper wies nach dem Beschichten eine Wärmeleitfähigkeit λ nach DIN EN 12667 von 0,0350 W/(mK), eine Dichte ρ nach DIN EN 1602 von 41,1 kg/m³ und eine Diffusionswiderstandszahl µ nach DIN EN ISO 7783: 2011 von 12 auf.

Die Kapillaraktivität wurde wie in Zusammenhang mit dem Ausführungsbeispiel 1 beschrieben bestimmt.

Die Gewichtszunahme des Filterpapiers betrug nach 48 Stunden 1,767 g, was einer Wasseraufnahme von 100 g/m² entspricht. Das Filterpapier war wiederum vollständig durchtränkt, so dass die Kapillaraktivität des Probenkörpers als hoch zu bezeichnen ist.

### Referenzbeispiel

### Schritt a)

Wie Ausführungsbeispiel 1.

### Schritt b)

Es wurde kein Schritt b) durchgeführt.

Der Polystyrol-Partikelschaumkörper wies eine Wärmeleitfähigkeit λ nach DIN EN 12667 von 0,0300 W/(mK) und eine Dichte ρ nach DIN EN 1602 von 27,0 kg/m³ auf. Die Diffusionswiderstandszahl µ nach DIN EN ISO 7783: 2011 betrug 12.

Die Wasseraufnahme bzw. Kapillaraktivität wurde analog den Ausführungsbeispielen 1 bis 3 bestimmt.

Die Gewichtszunahme des Filterpapiers betrug nach 48 Stunden 0,052 g, was einer Wasseraufnahme von 2,9 g/m² entspricht. Das Filterpapier war annähernd trocken. Der Probenkörper zeigte somit keine Kapillaraktivität.

## Patentansprüche

1. Wärmedämmplatte aus einem Polymer-Partikelschaum zur Innendämmung von Gebäudeaußenwänden oder -decken, umfassend miteinander verschweißte geschäumte Polymer-Partikel, die zusätzlich über ein organisches Bindemittel miteinander verklebt sind, so dass zwischen den verschweißten und verklebten Polymer-Partikeln ein Zwickelvolumen aus untereinander verbundenen Zwickelräumen verbleibt, wobei die das Zwickelvolumen begrenzenden Oberflächen der Polymer-Partikel mit einer Beschichtung versehen sind, die eine Kapillaraktivität der Wärmedämmplatte bewirkt oder eine bereits vorhandene Kapillaraktivität der Wärmedämmplatte erhöht.

2. Wärmedämmplatte nach Anspruch 1,
**dadurch gekennzeichnet, dass** die die Kapillaraktivität bewirkende oder erhöhende Beschichtung über wenigstens ein organisches und/oder anorganisches Bindemittel, insbesondere ein silikatisches Bindemittel, vorzugsweise Wasserglas, gebunden ist.

3. Wärmedämmplatte nach einem der vorhergehenden Ansprüche,
**dadurch gekennzeichnet, dass** die die Kapillaraktivität bewirkende oder erhöhende Beschichtung wenigstens einen Füll- und/oder Feststoff, vorzugsweise aus der Gruppe der silikatischen oder oxidischen Füllstoffe, der Carbonate und/oder der Sulfate, enthält.

4. Wärmedämmplatte nach einem der vorhergehenden Ansprüche,
**dadurch gekennzeichnet, dass** die die Kapillaraktivität bewirkende oder erhöhende Beschichtung ein Flammschutzmittel, vorzugsweise Aluminiumhydroxid, Ettringit und/oder ein anderes Hydrat, enthält.

5. Wärmedämmplatte nach einem der vorhergehenden Ansprüche,
**dadurch gekennzeichnet, dass** der Polymer-Partikelschaum verschweißte und verklebte Polymer-Partikel aus Polystyrol, Polylactid, Polyethylen und/oder Polypropylen umfasst.

6. Verfahren zur Herstellung einer Wärmedämmplatte nach einem der Ansprüche 1 bis 5, umfassend die Schritte:
a) Herstellen eines Polymer-Partikelschaumkörpers aus schäumbaren und/oder vorgeschäumten Polymer-Partikeln, die vor einem Endschäumprozess zumindest teilweise mit einem organischen Bindemittel beschichtet werden, das bei Aktivierung durch Zugabe von Feuchtigkeit und/oder Wärme einen die Expansion der Polymer-Partikel verringernden Bindemittelfilm ausbildet, so dass zwischen den verschweißten und verklebten Polymer-Partikeln des endgeschäumten Polymer-Partikelschaumkörpers ein Zwickelvolumen aus untereinander verbundenen Zwickelräumen verbleibt,
b) Beschichten der das Zwickelvolumen begrenzenden Oberflächen der verschweißten und verklebten Polymer-Partikel des Polymer-Partikelschaumkörpers mit einer Beschichtungszusammensetzung, die nach dem Aushärten eine Kapillaraktivität der Wärmedämmplatte bewirkt oder eine bereits vorhandene Kapillaraktivität der Wärmedämmplatte erhöht.

7. Verfahren nach Anspruch 6,
**dadurch gekennzeichnet, dass** in Schritt b) eine flüssige Beschichtungszusammensetzung, insbesondere in Form einer Lösung, Dispersion, Suspension oder Emulsion, verwendet wird, die wenigstens ein organisches und/oder anorganisches Bindemittel, insbesondere ein silikatisches Bindemittel, vorzugsweise Wasserglas enthält.

8. Verfahren nach Anspruch 6 oder 7,
**dadurch gekennzeichnet, dass** in Schritt b) eine Beschichtungszusammensetzung verwendet wird, die wenigstens ein Additiv, insbesondere ein Spreit-, Netz- und/oder Dispergiermittel, enthält.

9. Verfahren nach einem der Ansprüche 6 bis 8,
**dadurch gekennzeichnet, dass** in Schritt b) eine Beschichtungszusammensetzung verwendet wird, die wenigstens einen Füll- und/oder Feststoff, vorzugsweise aus der Gruppe der silikatischen oder oxidischen Füllstoffe, der Carbonate und/oder der Sulfate, enthält.

10. Verfahren nach einem der Ansprüche 6 bis 9,
**dadurch gekennzeichnet, dass** in Schritt b) eine Beschichtungszusammensetzung verwendet wird, die ein Flammschutzmittel, vorzugsweise Aluminiumhydroxid, Ettringit und/oder ein anderes Hydrat, enthält.

11. Verfahren nach einem der Ansprüche 6 bis 10,
**dadurch gekennzeichnet, dass** das Beschichten in Schritt b) mittels Tränken, Tunken, Tauchen, Fluten, Begießen und/oder Besprühen bewirkt wird, wobei vorzugsweise das Beschichten zumindest zeitweise unter Druck oder bei Unterdruck erfolgt.

12. Verfahren nach einem der Ansprüche 6 bis 11,
**dadurch gekennzeichnet, dass** ein Teil der Beschichtungszusammensetzung nach dem Beschichten in Schritt b) aus den untereinander verbundenen Zwickelräumen, beispielsweise durch Abtropfen oder Abschleudern, wieder entfernt wird.

13. Verfahren nach einem der Ansprüche 6 bis 12,
**dadurch gekennzeichnet, dass** in Schritt a) schäumbare und/oder vorgeschäumte Polymer-Partikel aus Polystyrol, Polylactid, Polyethylen und/oder Polypropylen zur Herstellung des Polymer-Partikelschaumkörpers verwendet werden.

14. Verfahren nach einem der Ansprüche 6 bis 13,
**dadurch gekennzeichnet, dass** in Schritt a) ein organisches Bindemittel, insbesondere ein Dispersionspulver, beispielsweise ein Dispersionspulver auf Basis von Homo-, Co- oder Terpolymeren von Acrylaten, Styrolacrylat, Vinylacetat, Ethylen, Vinylversatat, Vinyllaurat, Alkylacrylaten und/oder Vinylchlorid, zum Beschichten der schäumbaren und/oder vorgeschäumten Polymer-Partikel verwendet wird, wobei vorzugsweise dem organischen Bindemittel wenigstens ein Additiv, insbesondere ein Flammschutzmittel, zugegeben wird.

15. Verfahren nach einem der Ansprüche 6 bis 14,
**dadurch gekennzeichnet, dass** in Schritt a) die schäumbaren und/oder vorgeschäumten Polymer-Partikel vor dem Beschichten mit dem Bindemittel angefeuchtet werden oder feuchte Polymer-Partikel verwendet werden.

16. Verfahren nach einem der Ansprüche 6 bis 15,
**dadurch gekennzeichnet, dass** in Schritt a) die zur Aktivierung des Bindemittels erforderliche Feuchtigkeit und/oder Wärme bei einem Vor- oder Endschäumprozess, vorzugsweise in Form von Wasserdampf, zugegeben wird.

## Claims

1. A thermal insulation panel formed from a polymeric particle foam for the interior insulation of the external walls or ceilings of buildings, comprising foamed polymeric particles which have been fused together which are additionally bonded by means of an organic binder so that an interstitial volume of interconnected tooth implant cavities remains between the fused and bonded polymeric particles, wherein the surfaces of the polymeric particles delimiting the interstitial volume are provided with a coating which produces a capillary activity on the thermal insulation panel or enhances a capillary activity of the thermal insulation panel which is already present.

2. The thermal insulation panel as claimed in claim 1,
**characterized in that** the coating which produces or enhances the capillary activity is bonded by means of at least one organic and/or inorganic binder, in particular a siliceous binder, preferably water glass.

3. The thermal insulation panel as claimed in one of the preceding claims,
**characterized in that** the coating which produces or enhances the capillary activity contains at least one filler and/or solid, preferably from the group of siliceous or oxidic fillers, carbonates and/or sulphates.

4. The thermal insulation panel as claimed in one of the preceding claims,
**characterized in that** the coating which produces or enhances the capillary activity contains a flame retardant, preferably aluminium hydroxide, ettringite and/or another hydrate.

5. The thermal insulation panel as claimed in one of the preceding claims,
**characterized in that** the polymeric particle foam comprises fused and bonded polymeric particles formed from polystyrene, polylactide, polyethylene and/or polypropylene.

6. A process for the production of a thermal insulation panel as claimed in one of claims 1 to 5, comprising the following steps:
a) producing a polymeric particle foam body formed from foamable and/or pre-foamed polymeric particles which, prior to a final foaming process, are at least partially coated with an organic binder which, upon activation by the addition of moisture and/or heat, forms a binder film which reduces the expansion of the polymeric particles so that an interstitial volume of interconnecting interstitial cavities remains between the fused and bonded polymeric particles of the final foamed polymeric particle foam body,
b) coating the surfaces of the fused and bonded polymeric particles of the polymeric particle foam body delimiting the interstitial volume with a coating composition which, after curing, acts to produce a capillary activity of the thermal insulation panel or to enhance a capillary activity of the thermal insulation panel which is already present.

7. The process as claimed in claim 6,
**characterized in that** in step b), a liquid coating composition, in particular in the form of a solution, dispersion, suspension or emulsion is used, which contains at least one organic and/or inorganic binder, in particular a siliceous binder, preferably water glass.

8. The process as claimed in claim 6 or claim 7,
**characterized in that** a coating composition is used in step b) which contains at least one additive, in particular a spreading agent, wetting agent and/or dispersing agent.

9. The process as claimed in one of claims 6 to 8,
**characterized in that** a coating composition is used in step b) which contains at least one filler and/or solid, preferably from the group of siliceous or oxidic fillers, carbonates and/or sulphates.

10. The process as claimed in one of claims 6 to 9,
**characterized in that** a coating composition is used in step b) which contains a flame retardant, preferably aluminium hydroxide, ettringite and/or another hydrate.

11. The process as claimed in one of claims 6 to 10, **characterized in that** the coating of step b) is carried out by means of impregnation, dipping, immersion, flooding, perfusion and/or atomization, wherein preferably, coating is carried out at least at times under pressure or under partial vacuum.

12. The process as claimed in one of claims 6 to 11,
**characterized in that** a portion of the coating composition is removed once more from the interconnected interstitial cavities after coating in step b), for example by draining or spinning.

13. The process as claimed in one of claims 6 to 12,
**characterized in that** in step a), foamable and/or pre-foamed polymeric particles formed from polystyrene, polylactide, polyethylene and/or polypropylene are used for the production of the polymeric particle foam body.

14. The process as claimed in one of claims 6 to 13,
**characterized in that** in step a), an organic binder, in particular a dispersible powder, for example a dispersible powder based on homo-, co- or ter-polymers of acrylates, styrene acrylate, vinyl acetate, ethylene, vinyl versatate, vinyl laurate, alkyl acrylates and/or vinyl chloride is used to coat the foamable and/or pre-foamed polymeric particles, wherein preferably, at least one additive, in particular a flame retardant, is added to the organic binder.

15. The process as claimed in one of claims 6 to 14, **characterized in that** in step a), the foamable and/or pre-foamed polymeric particles are moistened prior to coating with the binder, or moist polymeric particles are employed.

16. The process as claimed in one of claims 6 to 15,
**characterized in that** in step a), the moisture and/or heat required to activate the binder is provided by means of a pre-foaming or final foaming process, preferably in the form of steam.

## Revendications

1. Panneau d'isolation thermique constitué d'une mousse de particules de polymère, destiné à l'isolation par l'intérieur de murs et de plafonds d'immeuble donnant sur l'extérieur, comprenant des particules de polymère expansées qui sont soudées les uns aux autres et, en outre, collées les unes aux autres au moyen d'un liant organique, faisant en sorte qu'entre les particules de polymère soudées et collées, il reste un volume interstitiel constitué d'interstices reliés les uns aux autres, les surfaces délimitant ledit volume interstitiel des particules de polymère étant pourvues d'un revêtement conférant au panneau d'isolation thermique une activité capillaire ou augmentant une activité capillaire dont le panneau d'isolation thermique était déjà doté.

2. Panneau d'isolation thermique selon la revendication 1,
**caractérisé en ce que** le revêtement conférant ou augmentant l'activité capillaire est lié au moyen d'au moins un liant organique et/ou inorganique, s'agissant notamment d'un liant de type silicate, préférentiellement de verre soluble.

3. Panneau d'isolation thermique selon l'une des revendications précédentes,
**caractérisé en ce que** le revêtement conférant ou augmentant l'activité capillaire contient au moins une charge et/ou matière solide, appartenant préférentiellement au groupe des charges de type silicate ou oxyde, des carbonates et/ou des sulfates.

4. Panneau d'isolation thermique selon l'une des revendications précédentes,
**caractérisé en ce que** le revêtement conférant ou augmentant l'activité capillaire contient un agent ignifuge, s'agissant préférentiellement d'hydroxyde d'aluminium, d'ettringite et/ou d'un autre hydrate.

5. Panneau d'isolation thermique selon l'une des revendications précédentes,
**caractérisé en ce que** la mousse de particules de polymère comprend des particules de polymère soudées et collées qui sont en polystyrène, acide polylactique, polyéthylène et/ou polypropylène.

6. Procédé de fabrication d'un panneau d'isolation thermique selon l'une des revendications 1 à 5, comprenant les étapes consistant à :
a) fabriquer un corps en mousse de particules de polymère, à partir de particules de polymère pré-expansées ou susceptibles d'être expansées lesquelles sont revêtues, avant de subir un processus d'expansion finale, d'un liant organique formant un film de liant diminuant l'expansion des particules de polymère lorsqu'il est activé par un apport d'humidité et/ou de chaleur, faisant en sorte que, suite au processus d'expansion finale, il subsiste entre les particules de polymère soudées et collées du corps en mousse de particules de polymère un volume interstitiel constitué d'interstices reliés les uns aux autres,
b) revêtir les surfaces délimitant le volume interstitiel des particules de polymère soudées et collées du corps en mousse de particules de polymère d'une composition de revêtement laquelle vient, suite à son durcissement, conférer au panneau d'isolation thermique une activité capillaire ou augmenter une activité capillaire dont le panneau d'isolation thermique était déjà doté.

7. Procédé selon la revendication 6,
**caractérisé en ce qu'**à l'étape b), on met en oeuvre une composition de revêtement liquide, notamment sous forme d'une solution, dispersion, suspension ou émulsion, laquelle contient au moins un liant organique et/ou inorganique, s'agissant notamment d'un liant de type silicate, préférentiellement de verre soluble.

8. Procédé selon les revendications 6 ou 7,
**caractérisé en ce qu'**à l'étape b), on met en oeuvre une composition de revêtement qui contient au moins un additif, d'agissant notamment d'un agent d'étalement, de mouillage et/ou de dispersion.

9. Procédé selon l'une des revendications 6 à 8,
**caractérisé en ce qu'**à l'étape b), on met en oeuvre une composition de revêtement qui contient au moins une charge et/ou matière solide, appartenant préférentiellement au groupe des charges de type silicate ou oxyde, des carbonates et/ou des sulfates.

10. Procédé selon l'une des revendications 6 à 9,
**caractérisé en ce qu'**à l'étape b), on met en oeuvre une composition de revêtement qui contient un agent ignifuge, s'agissant préférentiellement d'hydroxyde d'aluminium, d'ettringite et/ou d'un autre hydrate.

11. Procédé selon l'une des revendications 6 à 10,
**caractérisé en ce qu'**à l'étape b), le processus de revêtement est mis en oeuvre par imprégnation, immersion partielle, immersion totale, noyage, arrosage et/ou nébulisation, le processus de revêtement étant réalisé, au moins durant un certain temps, sous pression ou sous pression négative.

12. Procédé selon l'une des revendications 6 à 11,
**caractérisé en ce que**, suite au processus de revêtement mis en oeuvre à l'étape b), une partie de la composition de revêtement est retirée des interstices reliés les uns aux autres, par exemple par égouttage ou essorage.

13. Procédé selon l'une des revendications 6 à 12,
**caractérisé en ce qu'**à l'étape a), on met en oeuvre des particules de polymère pré-expansées ou susceptibles d'être expansées qui sont en polystyrène, acide polylactique, polyéthylène et/ou polypropylène, pour fabriquer le corps en mousse de particules de polymère.

14. Procédé selon l'une des revendications 6 à 13,
**caractérisé en ce qu'**à l'étape a), on met en oeuvre un liant organique, s'agissant notamment d'une poudre dispersible, par exemple d'une poudre dispersible à base d'homo-, co- ou terpolymères d'acrylates, d'acrylate de styrène, d'acétate de vinyle, d'éthylène, de versatate de vinyle, de laurate de vinyle, d'acrylates d'alkyle et/ou de chlorure de vinyle, pour revêtir les particules de polymère pré-expansées ou susceptibles d'être expansées, ledit liant organique subissant préférentiellement l'ajout d'au moins un additif, notamment d'un agent ignifuge.

15. Procédé selon l'une des revendications 6 à 14,
**caractérisé en ce qu'**à l'étape a), on humidifie les particules de polymère pré-expansées ou susceptibles d'être expansées avant de les revêtir dudit liant, ou l'on met en oeuvre des particules de polymère humides.

16. Procédé selon l'une des revendications 6 à 15,
**caractérisé en ce qu'**à l'étape a), l'humidité et/ou la chaleur nécessaire(s) à l'activation dudit liant est/sont préférentiellement ajoutée(s), lors d'un processus de pré-expansion ou d'expansion finale, sous forme de vapeur d'eau.
